# EUROPEAN PATENT APPLICATION

(11) **EP 2 402 081 A1**
(43) Date of publication of application: **04.01.2012**
(21) Application number: 10746126.1
(22) Date of filing: 18.02.2010
(51) Int. Cl.: B01J 23/46, B01J 37/08, B01J 37/18, C01B 3/04, C08G 14/073

(54) **AMMONIA DECOMPOSITION CATALYST**

(30) Priority: 27.02.2009 JP 2009045401; 27.02.2009 JP 2009045405
(71) Applicant: Hitachi Zosen Corporation, Osaka-shi, Osaka 559-8559 (JP); Toyota Jidosha Kabushiki Kaisha, Toyota-shi, Aichi 471-8571 (JP); Ihara Chemical Industry Co., Ltd., Tokyo 110-0008 (JP)
(72) Inventor: HIKAZUDANI, Susumu, Osaka-shi Osaka 559-8559 (JP); MORI, Takuma, Osaka-shi Osaka 559-8559 (JP); INAZUMI, Chikashi, Osaka-shi Osaka 559-8559 (JP); NAKANISHI, Haruyuki, Toyota-shi Aichi 471-8571 (JP); ARIKAWA, Hidekazu, Nagoya-shi Aichi 450-6038 (JP); KUMAGAI, Hironobu, Fuji-shi Shizuoka 421-3306 (JP)
(74) Representative: Albrecht, Ralf
(86) International application number: PCT/JP2010/052410
(87) International publication number: WO 2010/098245

(57) **Abstract**

Disclosed is an ammonia decomposition catalyst which is obtained by heat-treating a complex at a temperature of 360°C to 900°C in a reducing atmosphere, wherein the complex containing a polymer having a molecular weight of 1,000 to 500,000 represented by the formula [I], a transition metal coordinated with the polymer, and an activated carbon or a carbon nanotube added thereto. In a case of using the carbon nanotube, an alkali metal compound or an alkaline earth metal compound is added to the heat-treated complex. R₁ represents H or hydrocarbon having 1 to 10 carbon atoms, R₂ and R₃ each represent H, halogen, nitro, acyl, ester, carboxyl, formyl, nitrile, sulfone, aryl, or alkyl group having 1 to 15 carbon atoms, X and Y each represent H or OH, Z represents CH or N, R₄ and R₅ each represent H, OH, ether, amino, aryl, or alkyl group having 1 to 15 carbon atoms, x represents a real number of 1 to 2, y represents a real number of 1 to 3, and n represents a real number of 2 to 120. The amount of the transition metal deposited on the catalyst can be increased without deteriorating the dispersion of the metal, so that the amount of the catalyst required to obtain a desired activity can be reduced.

## Description

### Technical Field

The present invention relates to a transition metal-deposited ammonia decomposition catalyst useful for ammonia decomposition or hydrogen production from ammonia.

### Background Art

In conventional catalysts on which ruthenium is deposited as an active metal, a support is composed of a basic oxide (such as magnesium oxide) or an activated carbon, and the ruthenium is deposited on the support by an impregnation method or the like (see Patent Documents 1 and 2). The catalyst with such a structure has a less strong interaction between the ruthenium and the support, so that the ruthenium cannot be sufficiently fixed to the support. Therefore, in a reduction process performed after depositing the ruthenium on the support, the ruthenium particles are readily agglomerated to deteriorate the dispersion. In general, a reaction which is catalyzed by a metal-deposited catalyst proceeds on surfaces of the deposited metal particles. Thus, when the deposited metal particles are agglomerated to increase the particle diameter, the surface area of the deposited metal is reduced to deteriorate the activity.
Patent Document 1: JP-B-06-015041
Patent Document 2: Japanese Patent No. 03760257

### Disclosure of the Invention

### Problems to be solved by the Invention

When the agglomeration of the ruthenium particles can be suppressed to maintain the small particle diameter, the amount of the ruthenium required to obtain a desired activity can be reduced. For the purpose, it is considered that the ruthenium has to be fixed in order to prevent the ruthenium from forming the agglomeration.

Hydrogen is used as a fuel in polymer electrolyte fuel cells for vehicles. In order to achieve a travel distance of 500 km or more per each refueling, it is necessary to fill a 70-MPa pressure vessel with the hydrogen. Thus, infrastructures for supplying the hydrogen (hydrogen stations) are required over the country, and also the pressure vessel is costly. This contributes to the difficulty in the spread of fuel-cell cars.

Meanwhile, ammonia can be liquefied at a pressure of 1 MPa or less. Therefore, the hydrogen can be generated by decomposing the ammonia on board. Thus, the above-described problem can be solved by developing an excellent ammonia decomposition catalyst to use the ammonia as a fuel for the vehicle fuel cell.

### Means for Solving the Problems

As a result of research on a method for preventing the ruthenium agglomeration to maintain the small particle diameter, the inventors have found that the ruthenium can be deposited with a small particle diameter on the support in the following process.

According to the present invention, there is provided an ammonia decomposition catalyst obtained by heat-treating a complex at a temperature of 360°C to 900°C in a reducing atmosphere, wherein the complex contains a polymer having a molecular weight of 1,000 to 500,000 represented by the general formula [I]: 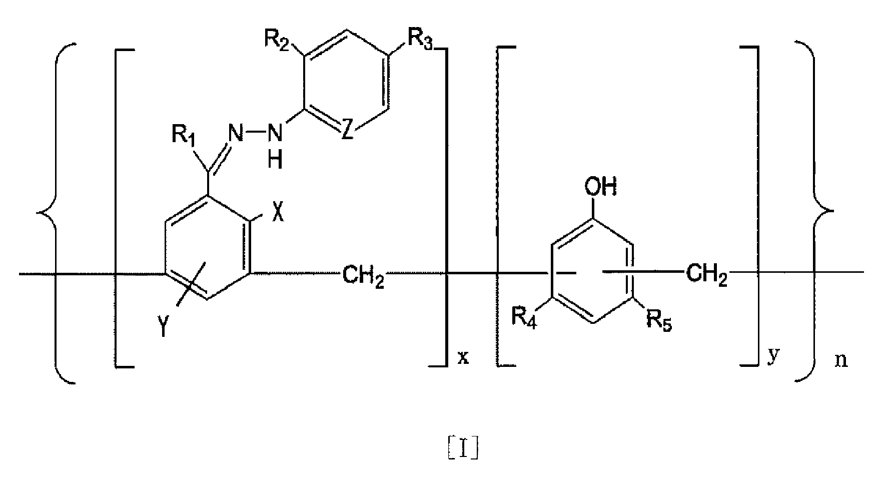 (wherein R₁ represents a hydrogen atom or a hydrocarbon group having 1 to 10 carbon atoms, the hydrocarbon group may be halogenated, R₂ and R₃ may be the same or different and each represent a hydrogen atom, a halogen atom, a nitro group, an acyl group, an ester group, a carboxyl group, a formyl group, a nitrile group, a sulfone group, an aryl group, or a straight or branched alkyl group having 1 to 15 carbon atoms, the alkyl and aryl groups may be halogenated and may be bonded to each other to form a condensed ring with the phenyl ring, X and Y may be the same or different and each represent a hydrogen atom or a hydroxyl group, Z represents CH or N, R₄ and R₅ may be the same or different and each represent a hydrogen atom, a hydroxyl group, an ether group, an amino group, an aryl group, or a straight or branched alkyl group having 1 to 15 carbon atoms, x represents a real number of 1 to 2, y represents a real number of 1 to 3, and n represents a real number of 2 to 120), a transition metal coordinated with the polymer, and an activated carbon added thereto.

The polymer [I] used in the production of the ammonia decomposition catalyst of the invention may be prepared by condensing a hydrazone compound represented by the general formula [II]: 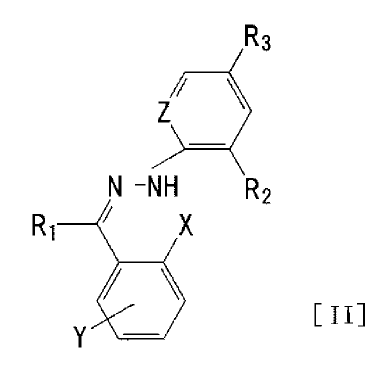 (wherein R₁, R₂, R₃, X, Y, and Z are defined as above) with a phenol compound represented by the general formula [III]: 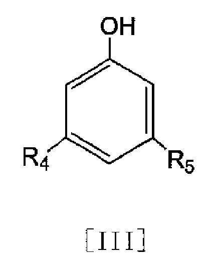 (wherein R₄ and R₅ are defined as above) and formaldehyde or paraformaldehyde in the presence of an acid or a base.

The molar ratio of the hydrazone compound, the phenol compound, and the formaldehyde or the paraformaldehyde is 1:1:1 1 to 1:3:4, preferably 1:1:2.

The ratio of the transition metal in the polymer is 5.0% to 15.0% by weight, preferably 10.0% by weight.

The transition metal used in the production of the ammonia decomposition catalyst of the invention is preferably in a form of a fine particle having a diameter of 1 nm or less. The particle diameter of the transition metal is generally measured using a transmission electron microscope.

A transition metal complex may be prepared by mixing the polymer [I] with a transition metal compound in a medium to coordinate the polymer [I] to the transition metal.

It is preferred that a solution of the polymer [I] in an organic solvent such as N-methyl-2-pyrrolidone, N,N-dimethylformamide, or tetrahydrofuran is mixed with a solution of the transition metal compound. In the case of using the solution, the transition metal is more likely to be introduced to a desired position in the polymer [I], whereby the transition metal functions more effectively to improve the catalytic activity. As the organic solvent for dissolving the polymer [I] and the solvent for dissolving the transition metal compound, the one which can dissolve each other is used.

The transition metal complex may be prepared by mixing the hydrazone compound [II] with the transition metal compound in a medium to coordinate the hydrazone compound [II] to the transition metal and then by condensing the transition metal-containing hydrazone compound [II] with the phenol compound [III] and the formaldehyde or the paraformaldehyde in the presence of the acid or base.

The activated carbon may be added in any step of the preparation of the transition metal complex. For example, the complex may be prepared by a method comprising the steps of polymerizing the hydrazone compound [II], coordinating the polymer to the transition metal, and then adding the activated carbon to the complex, or by a method comprising the steps of coordinating the hydrazone compound [II] to the transition metal, polymerizing the transition metal-containing hydrazone compound [II], and then adding the activated carbon to the polymer, or by a method comprising the steps of coordinating the hydrazone compound [II] to the transition metal (using an organic solvent such as acetone if necessary), adding the activated carbon thereto, and then polymerizing the hydrazone compound [II].

The ammonia decomposition catalyst of the invention may be such that a complex contains the polymer having the molecular weight of 1,000 to 500, 000 represented by the general formula [I], the transition metal coordinated with the polymer, and a carbon nanotube added instead of the activated carbon, the complex is heat-treated at the temperature of 360°C to 900°C in the reducing atmosphere, and an alkali metal compound or an alkaline earth metal compound is added to the heat-treated complex.

The carbon nanotube may be added in any step of the preparation of the transition metal complex. For example, the complex may be prepared by a method comprising the steps of polymerizing the hydrazone compound [II], coordinating the polymer to the transition metal, and then adding the carbon nanotube to the complex, or by a method comprising the steps of coordinating the hydrazone compound [II] to the transition metal, polymerizing the transition metal-containing hydrazone compound [II], and then adding the carbon nanotube to the resultant polymer, or by a method comprising the steps of coordinating the hydrazone compound [II] to the transition metal (using the organic solvent such as acetone if necessary), adding the carbon nanotube thereto, and then polymerizing the hydrazone compound [II].

The weight ratio of the hydrazone compound [II] or the polymer thereof to the activated carbon or the carbon nanotube is 1:5 to 1:15, preferably 1:9.

Preferred examples of the hydrazone compounds [II] suitable for preparing the transition metal complex include the following compounds.

### 4-{1-[(2,4-dinitrophenyl)hydrazono]ethyl}benzene-1,3-diol (Compound 1):

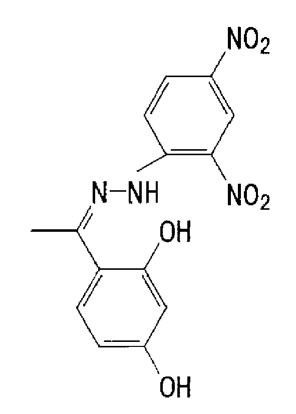

### 2-{1-[(2,4-dinitrophenyl)hydrazono]ethyl}benzen-1-ol (Compound 2):

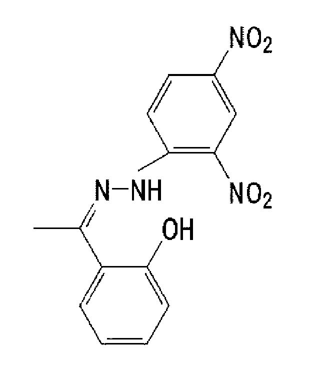

### 4-{1-[(2,4-dinitrophenyl)hydrazono]ethyl}benzen-1-ol (Compound 3):

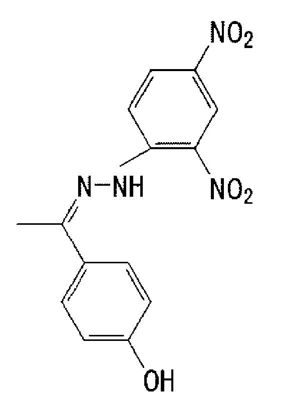

### 3-{1-[(2,4-dinitrophenyl)hydrazono]ethyl}benzene-1,4-diol (Compound 4):

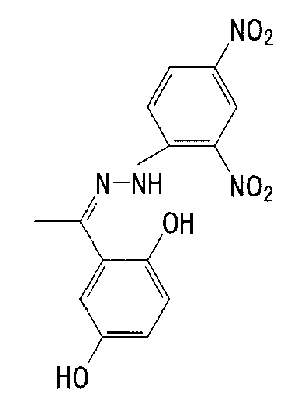

### 4-{1-[(2,4-dinitrophenyl)hydrazono]methyl}benzene-1,3-diol (Compound 5):

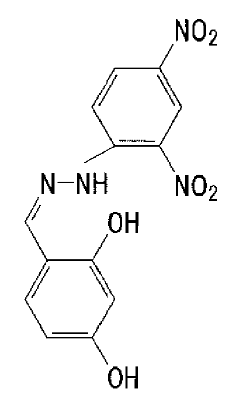

### 4-{1-[(4-nitrophenyl)hydrazono]ethyl}benzene-1,3-diol (Compound 6):

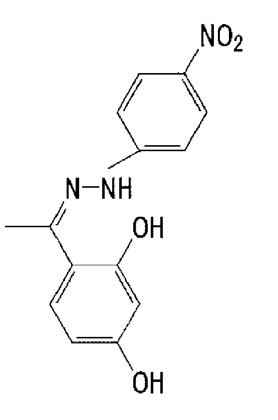

### 4-{1-[(2-nitrophenyl)hydrazono]ethyl}benzene-1,3-diol (Compound 7):

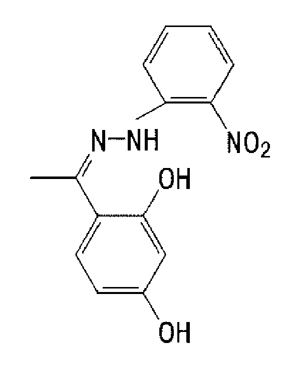

### 4-{1-[(2,4-dichlorophenyl)hydrazono]ethyl}benzene-1,3-diol (Compound 8):

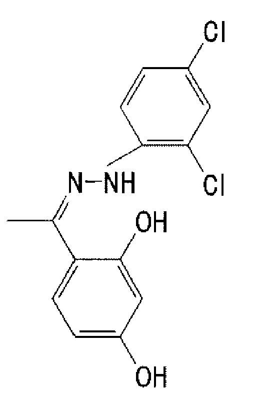

### 4-{1-[(phenyl)hydrazono]ethyl}benzene-1,3-diol (Compound 9) :

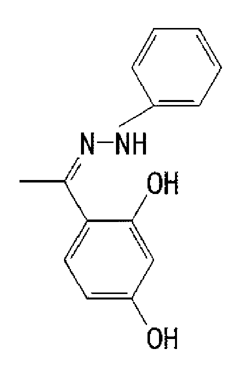

### 4-{1-[(2-pyridino)hydrazono]ethyl}benzene-1,3-diol (Compound 10) :

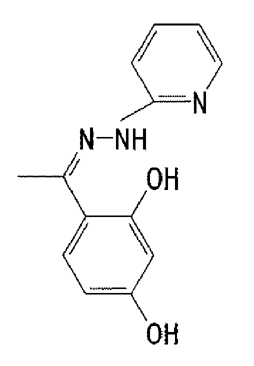

When the hydrazone compound [II] has a pyridine ring, for example it may be produced according to the following reaction scheme: 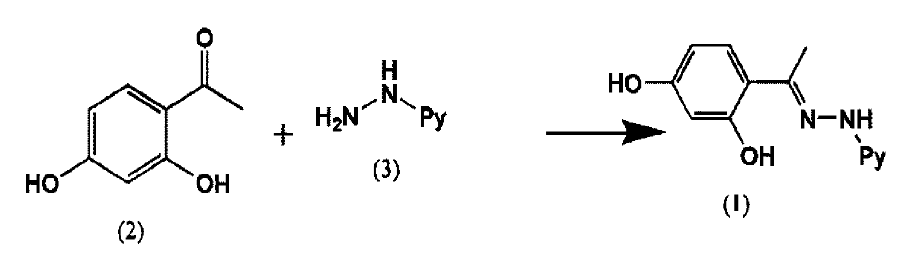 (wherein Py represents a 2-pyridyl group, a 3-pyridyl group, or a 4-pyridyl group.)

The hydrazone compound represented by the general formula (1) may be produced by reacting the ketone compound represented by the general formula (2) (2,4-dihydroxyacetophenone) with the hydrazine compound represented by the general formula (3) (hydrazinopyridine) in an appropriate solvent system or a solvent-free system in the presence or absence of a condensing agent.

The ketone compound represented by the general formula (2) and the hydrazine compound represented by the general formula (3) are known compounds, which can be commercially obtained or synthesized by a common method.

In the above reaction, the amount of the hydrazine compound represented by the general formula (3) used per 1 mol of the ketone compound represented by the general formula (2) is generally 0.8 to 10 mol, preferably 1.0 to 5.0 mol, more preferably 1.0 to 2.0 mol.

The above reaction proceeds in the presence of an acid catalyst, and the condensing agent is preferably used to accelerate the reaction. Specific examples of the acid catalysts include protonic acids such as hydrogen chloride, concentrated sulfuric acid, phosphoric acid, and acetic acid. Specific examples of the condensing agents include common agents such as DCC (dicyclohexylcarbodiimide). The amount of each of the acid catalyst and the condensing agent used per 1 mol of the ketone compound represented by the general formula (2) is generally 0.0001 to 10 mol, preferably 0.0001 to 5 mol, more preferably 0.0001 to 2 mol.

Though the above reaction proceeds even in the solvent-free system, a solvent is preferably used to carry out the reaction more efficiently. The solvent for the reaction is not particularly limited as long as it does not inhibit the reaction and is stable in the reaction. Examples of the solvents include ethers such as phenyl ethers and anisole; aromatic hydrocarbons such as toluene, xylenes, mesitylene, and tetralin; alicyclic hydrocarbons such as decalin; aprotic polar solvents such as N,N-dimethylformamide (DMF), N,N-dimethylacetamide (DMAC), N,N-dimethylimidazolidinone (DMI), N-methylpyrrolidone (NMP), dimethylsulfoxide (DMSO), and sulfolane (TMSO₂); aromatic nitro compounds such as nitrobenzene and p-nitrotoluene; and aromatic halogen compounds such as chlorobenzene, o-dichlorobenzene, and trichlorobenzene.

The amount of the solvent used per 1 mol of the ketone compound represented by the general formula (3) is generally 0 to 3.0 L, preferably 0.05 to 1.5 L.

The reaction temperature used in the above reaction is not particularly limited as long as the reaction proceeds. The reaction temperature is generally -20°C to 150°C, preferably 10°C to 120°C, more preferably 20°C to 100°C.

The reaction time is not particularly limited, and is preferably 0.5 to 40 hours in view of reducing by-products, etc.

After the reaction, the resultant precipitated crystal may be isolated by filtration or the like, and the crystal may be washed with water, an organic solvent such as methanol, or a mixture thereof and then dried if necessary. The drying temperature is not particularly limited as long as it is less than a melting point or a decomposition point of the hydrazone compound (1). For example, the drying temperature is generally 20°C to 200°C, preferably 30°C to 180°C, more preferably 40°C to 150°C.

An example of the production of the hydrazone compound (1) will be described below.

33.8 g (0.309 mol) of 2-hydrazinopyridine and 2 L of methanol were added to a 3-L 4-necked flask equipped with a reflux condenser tube, a thermometer, and a stirrer. 1 mL of concentrated sulfuric acid was added thereto dropwise while stirring at the room temperature. Then, 44.0 g (0.289 mol) of 2, 4-dihydroxyacetophenone was added to the mixture, and the reaction was carried out under stirring at 40°C for 8 hours.

The precipitated crystal was isolated by filtration, washed with methanol and water, and dried at 60°C, to obtain 33.0 g of 4-{1-[(2-pyridin-2-yl)hydrazono]ethyl}benzene 1,3-diol as a pale yellow crystal with a yield of 50%.

The obtained crystal was subjected to GC/MS, ¹H-NMR, and IR measurement. The results are as follows.
Melting point: 230°C
GC/MS (EI): M/Z = 243 (M⁺), 228 (M⁺-CH₃)
¹H-NMR (300 MHz, DMSO-d₆): d = 2.33 (s, 3H), 6.26 (d, 1H, J = 2.4 Hz), 6.31 (dd, 1H, J = 2.4 Hz, J = 8.7 Hz), 6.80 (ddd, 1H, J = 0.7 Hz, J = 5.1 Hz, J = 7.2 Hz), 6.89 (d, 1H, J = 8.4 Hz), 7.36 (d, 1H, J = 8.7 Hz), 7.64 (ddd, 1H, J = 1.8 Hz, J = 7.2 Hz, J = 8.4 Hz), 8.18 (ddd, 1H, J = 0.7 Hz, J = 1.8 Hz, J = 5.1 Hz), d = 9.65 (s, 1H), d = 9.93 (s, 1H), d = 13.36 (s, 1H) IR (KBr, cm⁻¹): 3440, 3372, 1630, 1598, 1578, 1506, 1454, 1255, 767

The phenol compound [III] is preferably phenol.

The transition metal is preferably ruthenium or iron, particularly preferably ruthenium. The ruthenium compound is preferably ruthenium chloride. The iron compound is preferably iron acetate.

The transition metal complex to which the activated carbon is added is heat-treated in the reducing atmosphere, whereby the complex is converted to the ammonia decomposition catalyst.

The transition metal complex to which the carbon nanotube is added is heat-treated in the reducing atmosphere, and to the heat-treated complex is added the alkali metal compound or the alkaline earth metal compound, whereby the complex is converted to the ammonia decomposition catalyst.

The temperature of the heat treatment in the reducing atmosphere is 360°C to 900°C, preferably 450°C. When the temperature is too low, an unreacted hydrazone compound monomer and a part of the polymer thereof cannot be heat-decomposed and removed. The heat decomposition residue is in a form of a graphite-like graphene sheet. An upper limit of the heat treatment temperature is slightly higher than an upper limit 800°C of a catalyst use temperature. The ruthenium is agglomerated more readily at a higher temperature. Therefore, the heat treatment is preferably carried out at a lower temperature.

In the ammonia decomposition catalyst generated from the transition metal complex to which the carbon nanotube is added, the alkali metal compound or the alkaline earth metal compound, which is added after the heat treatment, acts as an accelerator for improving the catalytic activity. Examples of such compounds include barium nitrate, cesium nitrate, and strontium nitrate. The molar ratio of the added alkali metal compound or the alkaline earth metal compound to the supported ruthenium is preferably 1.0.

The ammonia decomposition catalyst of the invention can be suitably used in the process of decomposing ammonia to produce hydrogen at a reaction temperature of 250°C to 900°C in the presence of the catalyst. When the reaction temperature is lower than 250°C, the catalytic activity cannot be obtained. An upper limit of the reaction temperature is practically 900°C or lower because engines using the ammonia as a fuel have an exhaust gas temperature of at most 900°C.

More specifically, for example, the ruthenium-deposited ammonia decomposition catalyst may be produced by the following method.

### Production method 1)

The polymer is prepared using the particular hydrazone compound capable of taking the metal therein as a starting material. The polymer is dispersed in an aqueous solution of the ruthenium compound such as ruthenium chloride. Or alternatively, the polymer is dissolved in the organic solvent such as N-methyl-2-pyrrolidone, N,N-dimethylformamide, or tetrahydrofuran, and the aqueous solution of the ruthenium compound such as ruthenium chloride is added to the resultant solution. After a certain period of time, the generated solid substance is collected by filtration. The collected substance is dried to remove the solvent. The dried solid is dissolved in the organic solvent such as N-methyl-2-pyrrolidone, N,N-dimethylformamide, or tetrahydrofuran, and the activated carbon is added to and mixed with the solution. Then, the organic solvent is removed, the solid substance is dried, and the dried substance is heat-treated at 360°C to 900°C in the reducing atmosphere using an inert gas such as nitrogen, a reducing gas such as hydrogen, etc.

In thus-obtained catalyst, the deposited ruthenium particles have a diameter of 1 nm or less and are prevented from agglomerating. Furthermore, even though the deposited ruthenium amount of this catalyst is smaller than those of conventional catalysts, the ammonia decomposition activity of this catalyst is higher than those of the conventional catalysts. This is probably because the deposited ruthenium particles have a smaller diameter and thus an increased surface area. The ruthenium particles having a smaller diameter can be deposited probably because the hydrazone compound used as the starting material for the polymer has a site suitable for the ruthenium coordination, and the ruthenium is fixed to the site. When only the coordination polymer compound is heat-treated, the ruthenium particles are agglomerated during the hydrazone compound decomposition process. In contrast, since the catalyst of the invention contains the activated carbon, the polymer is fixed to the activated carbon in the heat treatment. Therefore, even when the compound is decomposed in the heat treatment, the ruthenium particles are disposed on a decomposition product fixed to the activated carbon. Furthermore, since the activated carbon has a large specific surface area, the fixed ruthenium particles are less likely to be positioned close to each other. Thus, the ruthenium particles are prevented from agglomerating. In addition, since the activated carbon is mixed with the solution of the ruthenium-coordinated polymer in the organic solvent, the polymer can reach the inside of pores in the activated carbon. The fixed ruthenium particles are further less likely to be positioned close to each other, utilizing the large specific surface area property of the activated carbon effectively, as compared with a process of mixing the solid substances directly. Thus, the ruthenium particles are further prevented from agglomerating.

### Production method 2)

The particular hydrazone compound capable of taking the metal therein is coordinated to the ruthenium. The ruthenium coordination may be performed by a process comprising dispersing the hydrazone compound in the aqueous solution of the ruthenium compound such as ruthenium chloride, or a process comprising dissolving the hydrazone compound in the organic solvent such as acetone and further dissolving the ruthenium compound such as ruthenium chloride in the solution, etc. The ruthenium-coordinated hydrazone compound prepared by such a process is condensed with the phenol compound represented by the general formula [III] and the formaldehyde or the paraformaldehyde in the presence of the acid or base to prepare the polymer. When the activated carbon is added in the polymerization step, the polymerization can proceed on the surface of the activated carbon, whereby the surface can be coated with the ruthenium-coordinated polymer. The polymer-coated activated carbon is collected by filtration, and then is dried to remove the solvent. The dried solid is heat-treated at 360°C to 900°C in the reducing atmosphere using the inert gas such as nitrogen, the reducing gas such as hydrogen, etc.

In thus-obtained catalyst, the deposited ruthenium particles have a diameter of 1 nm or less and are prevented from agglomerating. Furthermore, even though the deposited ruthenium amount of this catalyst is smaller than those of the conventional catalysts, the ammonia decomposition activity of this catalyst is higher than those of the conventional catalysts. This is probably because the deposited ruthenium particles have a smaller diameter and thus an increased surface area. The ruthenium particles having a smaller diameter can be deposited probably because the hydrazone compound used as the starting material for the polymer has a site suitable for the ruthenium coordination, and the ruthenium is fixed to the site. When only the ruthenium-coordinated polymer is heat-treated, the ruthenium particles are agglomerated during the hydrazone compound decomposition process. In a case where the activated carbon is simply coated with the ruthenium-coordinated polymer, the ruthenium particles are disposed on the hydrazone decomposition product fixed to the activated carbon during the polymer decomposition process in the heat treatment. However, in this case, because the activated carbon and the fixed polymer are bonded only with a small bonding force, the agglomeration cannot be satisfactorily reduced even though the agglomeration can be reduced as compared with the ruthenium-coordinated polymer. In contrast, in the activated carbon coated with the polymer, the carbon atoms in the polymer molecule are fixed in a network form to the activated carbon during the polymer decomposition in the heat treatment. Further the polymer decomposition product is fixed on the fixed network carbon atoms, and the ruthenium particles are fixed on the decomposition product. Thus, the ruthenium particles are more firmly fixed and thereby are further prevented from agglomerating.

### Production method 3)

The polymer is prepared using the particular hydrazone compound capable of taking the metal therein as a starting material. The polymer is dispersed in the aqueous solution of the ruthenium compound such as ruthenium chloride. Or alternatively, the polymer is dissolved in the organic solvent such as N-methyl-2-pyrrolidone, N,N-dimethylformamide, or tetrahydrofuran, and the aqueous solution of the ruthenium compound such as ruthenium chloride is added to the resultant solution. After a certain period of time, the generated solid substance is collected by filtration. The collected substance is dried to remove the solvent. The dried solid is dissolved in the organic solvent such as N-methyl-2-pyrrolidone, N,N-dimethylformamide, or tetrahydrofuran, and the carbon nanotube is added to and mixed with the solution. Then, the organic solvent is removed, the solid substance is dried, and the dried substance is heat-treated at 360°C to 900°C in the reducing atmosphere using the inert gas such as nitrogen, the reducing gas such as hydrogen. The heat-treated product is added to and mixed with an aqueous solution of the alkali metal compound or the alkaline earth metal compound such as barium nitrate, and the solid residue is isolated and dried.

In thus-obtained catalyst, the deposited ruthenium particles have a diameter of 1 nm or less and are prevented from agglomerating. Furthermore, even though the deposited ruthenium amount of this catalyst is smaller than those of the conventional catalysts, the ammonia decomposition activity of this catalyst is higher than those of the conventional catalysts. This is probably because the deposited ruthenium particles have a smaller diameter and thus an increased surface area.

The ruthenium particles having a smaller diameter can be deposited probably because the hydrazone compound used as the starting material for the polymer has a site suitable for the ruthenium coordination, and the ruthenium is fixed to the site. When the coordination compound is heat-treated without the addition of the carbon nanotube, the ruthenium particles are agglomerated during the hydrazone compound decomposition process. In contrast, since the catalyst of the invention contains the carbon nanotube, the polymer is fixed to the carbon nanotube in the heat treatment. Therefore, even when the compound is decomposed in the heat treatment, the ruthenium particles are disposed on the decomposition product fixed to the carbon nanotube. Furthermore, since the carbon nanotube has a large specific surface area, the fixed ruthenium particles are less likely to be positioned close to each other. Thus, the ruthenium particles are prevented from agglomerating. In addition, since the carbon nanotube is mixed with the solution of the ruthenium-coordinated polymer in the organic solvent, the polymer can reach the inside of pores in the carbon nanotube. The fixed ruthenium particles are further less likely to be positioned close to each other, utilizing the large specific surface area property of the carbon nanotube effectively, as compared with a process of mixing the solid substances directly. Thus, the ruthenium particles are further prevented from agglomerating.

The catalyst of the invention further contains the alkali metal compound or the alkaline earth metal compound such as a barium compound. Since the carbon nanotube has an electric conductivity, electrons supplied from the alkali metal compound or the alkaline earth metal compound on the carbon nanotube can be transferred through the carbon nanotube to the ruthenium. Therefore, the catalyst can be effective even when there are no electrons in the vicinity of the ruthenium. Thus, the activity of the deposited ruthenium is improved, and also this is considered to contribute to the ammonia decomposition activity higher than those of the conventional catalysts.

The ruthenium-fixed hydrazone compound is polymerized. For example, in a case of 4-{1-[(2,4-dinitrophenyl)hydrazono]ethyl}benzene-1,3-diol, this hydrazone compound is condensed with phenol and formaldehyde in the presence of the acid or base, the resultant polymer has a structure containing a repeating unit represented by the following formula. 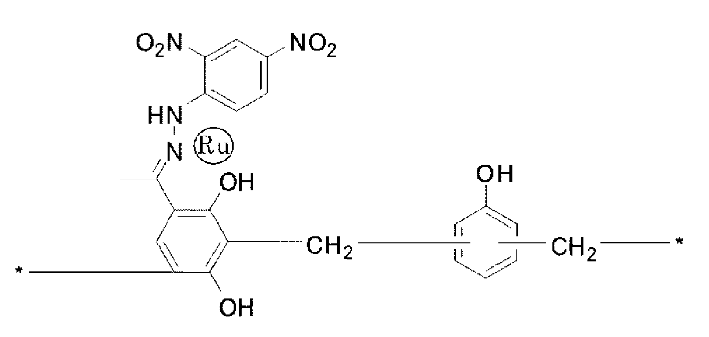 In this polymer, the fixed ruthenium particles are less likely to be positioned close to each other, and thereby are prevented from agglomerating.

The ammonia decomposition catalyst according to the invention has a pellet form with a diameter of equal to 60 mesh or more and equal to 40 mesh or less mesh (i.**e.** the pellet passes through a 40-mesh screen and does not pass through a 60-mesh screen).

### Advantage of the Invention

In the transition metal-deposited catalyst according to the present invention, since the transition metal is fixed and prevented from agglomerating, the amount of the transition metal deposited on the catalyst can be increased without deteriorating the dispersion of the metal, so that the amount of the catalyst required to obtain a desired activity can be reduced. Furthermore, the addition of the activated carbon makes it possible to coat the surface of the activated carbon with the transition metal-containing polymer, whereby the surface area of the catalyst can be increased to improve the activity.

Another transition metal-deposited catalyst according to the present invention contains the carbon nanotube. Since the carbon nanotube has a large specific surface area, the fixed transition metal particles are less likely to be positioned close to each other, and thereby are prevented from agglomerating. When the carbon nanotube is mixed with the solution of the transition metal-coordinated polymer in the organic solvent, the polymer can reach the inside of pores in the carbon nanotube. The fixed transition metal particles are further less likely to be positioned close to each other, utilizing the large specific surface area property of the carbon nanotube effectively, as compared with a process of mixing the solid substances directly. Thus, the transition metal ruthenium particles are further prevented from agglomerating. Another catalyst according to the present invention further contains the alkali metal compound or the alkaline earth metal compound. Since the carbon nanotube has an electric conductivity, electrons supplied from the alkali metal compound or the alkaline earth metal compound on the carbon nanotube can be transferred through the carbon nanotube to the transition metal ruthenium. Therefore, the catalyst can be effective even when there are no electrons in the vicinity of the transition metal ruthenium. Thus, the activity of the deposited transition metal ruthenium is improved, whereby the catalyst has the ammonia decomposition activity higher than those of the conventional catalysts.

### Best Mode for Carrying Out the Invention

Next, several Examples and Comparative Examples for comparison therewith will be described below to specifically illustrate the present invention.

### Example 1

i) A monomer of 4-{1-[(2,4-dinitrophenyl)hydrazono]ethyl}benzene-1,3-diol (Compound 1) was suspended in deionized water, and phenol and an aqueous 40-wt% formaldehyde solution were added to the suspension at the room temperature. The addition ratio of the hydrazone compound/phenol/aqueous 40-wt% formaldehyde solution was 1 g/0.5 g/0.5 ml. NaOH was further added to the mixture, and the resultant was stirred and refluxed at 110°C for 8 hours. The addition ratio of the hydrazone compound/NaOH was 32 g/1 g. Thus-generated solid substance was isolated by filtration and washed with deionized water several times, and the pH of the solid substance in deionized water was adjusted to 7. Then, the solid substance was isolated by filtration, washed, and dried at 60°C for 2 to 3 hours, to obtain 27.5 g of a polymer having a molecular weight of 1,000 to 500,000.
ii) The polymer was suspended in 100 ml of an aqueous 10-g/l ruthenium chloride solution, stirred for 2 hours, and isolated by filtration, to obtain a solid substance. The solid substance was dried at 110°C. The dried solid was dissolved in N-methyl-2-pyrrolidone, and an activated carbon was added to the solution such that the weight ratio of the dried solid to the activated carbon was 1:9. The components were mixed for 2 hours, N-methyl-2-pyrrolidone was removed by filtration, and the solid material was dried.

The dried solid was introduced to a reactor and heat-treated at 450°C for 2 hours in a reducing hydrogen atmosphere, to obtain a pellet catalyst (60/40 mesh).

### Examples 2 to 10

Catalysts of Examples 2 to 10 were produced in the same manner as Example 1 except for using as the monomer 2-{1-[(2,4-dinitrophenyl)hydrazono]ethyl}benzen-1-ol (Compound 2),
4-{1-[(2,4-dinitrophenyl)hydrazono]ethyl}benzen-1-ol (Compound 3),
3-{1-[(2,4-dinitrophenyl)hydrazono]ethyl}benzene-1,4-diol (Compound 4),
4-{1-[(2,4-dinitrophenyl)hydrazono]methyl}benzene-1,3-diol (Compound 5),
4-{1-[(4-nitrophenyl)hydrazono]ethyl}benzene-1,3-diol (Compound 6),
4-{1-[(2-nitrophenyl)hydrazono]ethyl}benzene-1,3-diol (Compound 7),
4-{1-[(2,4-dichlorophenyl)hydrazono]ethyl}benzene-1,3-diol (Compound 8),
4-{1-[(phenyl)hydrazono]ethyl}benzene-1,3-diol (Compound 9), and
4-{1-[(2-pyridino)hydrazono]ethyl}benzene-1,3-diol (Compound 10), respectively.

### Example 11

i) A monomer of 4-{1-[(2,4-dinitrophenyl)hydrazono]ethyl}benzene-1,3-diol (Compound 1) was suspended in deionized water, and phenol and an aqueous 40-wt% formaldehyde solution were added to the suspension at the room temperature. The addition ratio of the hydrazone compound/phenol/aqueous 40-wt% formaldehyde solution was 1 g/0.5 g/0.5 ml. NaOH was further added to the mixture, and the resultant was stirred and refluxed at 110°C for 8 hours. The addition ratio of the hydrazone compound/NaOH was 32 g/1 g. Thus-generated solid substance was isolated by filtration and washed with deionized water several times, and the pH of the solid substance in deionized water was adjusted to 7. Then, the solid substance was isolated by filtration, washed, and dried at 60°C for 2 to 3 hours, to obtain 27.5 g of a polymer having a molecular weight of 1,000 to 500,000.
ii) The polymer was suspended in 100 ml of an aqueous 10-g/l ruthenium chloride solution, stirred for 2 hours, and isolated by filtration, to obtain a solid substance. The solid substance was dried at 110°C. An activated carbon was added to the dried solid such that the weight ratio of the dried solid to the activated carbon was 1:9. The components were mixed for 2 hours, N-methyl-2-pyrrolidone was removed by filtration, and the solid substance was dried.

The dried solid was introduced to a reactor and heat-treated at 450°C for 2 hours in a reducing hydrogen atmosphere, to obtain a pellet catalyst (60/40 mesh).

### Examples 12 to 20

Catalysts of Examples 12 to 20 were produced in the same manner as Example 11 except for using as the monomer 2-{1-[(2,4-dinitrophenyl)hydrazono]ethyl}benzen-1-ol (Compound 2),
4-{1-[(2,4-dinitrophenyl)hydrazono]ethyl}benzen-1-ol (Compound 3),
3-{1-[(2,4-dinitrophenyl)hydrazono]ethyl}benzene-1,4-diol (Compound 4),
4-{1-[(2,4-dinitrophenyl)hydrazono]methyl}benzene-1,3-diol (Compound 5),
4-{1-[(4-nitrophenyl)hydrazono]ethyl}benzene-1,3-diol (Compound 6),
4-{1-[(2-nitrophenyl)hydrazono]ethyl}benzene-1,3-diol (Compound 7),
4-{1-[(2,4-dichlorophenyl)hydrazono]ethyl}benzene-1,3-diol (Compound 8),
4-{1-[(phenyl)hydrazono]ethyl}benzene-1,3-diol (Compound 9), and
4-{1-[(2-pyridino)hydrazono]ethyl}benzene-1,3-diol (Compound 10), respectively.

### Example 21

i) A monomer of 4-{1-[(2,4-dinitrophenyl)hydrazono]ethyl}benzene-1,3-diol (Compound 1) was dissolved in acetone, and an aqueous ruthenium chloride solution was added to the solution. The addition ratio of the hydrazone compound/ruthenium chloride was 1 mol/1 mol. The mixture was stirred for 2 hours, and the solid substance was isolated by filtration.
ii) The solid substance was suspended in deionized water, and phenol and an aqueous 40-wt% formaldehyde solution were added to the suspension at the room temperature. The addition ratio of the hydrazone compound/phenol/aqueous 40-wt% formaldehyde solution was 1 g/0.5 g/0.5 ml. NaOH was further added to the mixture, and the resultant was stirred. An activated carbon was further added thereto such that the weight ratio of the hydrazone compound to the activated carbon was 1:9, and the resultant was refluxed at 110°C for 8 hours. The addition ratio of the hydrazone compound/NaOH was 32 g/1 g. Thus-generated solid material was isolated by filtration and washed with deionized water several times, and the pH of the solid in deionized water was adjusted to 7. Then, the solid was isolated by filtration, washed, and dried at 60°C for 2 to 3 hours, to obtain a polymer having a molecular weight of 1,000 to 500,000.

The dried solid was introduced to a reactor and heat-treated at 450°C for 2 hours in a reducing hydrogen atmosphere, to obtain a pellet catalyst (60/40 mesh).

### Examples 22 to 30

Catalysts of Examples 22 to 30 were produced in the same manner as Example 21 except for using as the monomer 2-{1-[(2,4-dinitrophenyl)hydrazono]ethyl}benzen-1-ol (Compound 2),
4-{1-[(2,4-dinitrophenyl)hydrazono]ethyl}benzen-1-ol (Compound 3),
3-{1-[(2,4-dinitrophenyl)hydrazono]ethyl}benzene-1,4-diol (Compound 4),
4-{1-[(2,4-dinitrophenyl)hydrazono]methyl}benzene-1,3-diol (Compound 5),
4-{1-[(4-nitrophenyl)hydrazono]ethyl}benzene-1,3-diol (Compound 6),
4-{1-[(2-nitrophenyl)hydrazono]ethyl}benzene-1,3-diol (Compound 7),
4-{1-[(2,4-dichlorophenyl)hydrazono]ethyl}benzene-1,3-diol (Compound 8),
4-{1-[(phenyl)hydrazono]ethyl}benzene-1,3-diol (Compound 9), and
4-{1-[(2-pyridino)hydrazono]ethyl}benzene-1,3-diol (Compound 10), respectively.

### Example 31

i) In the step i) of Example 21, a monomer of 4-{1-[(2,4-dinitrophenyl)hydrazono]ethyl}benzene-1,3-diol (Compound 1) was not dissolved in acetone and was suspended in an aqueous ruthenium chloride solution having a ruthenium concentration of 10 g/L. The addition ratio of the hydrazone compound/ruthenium chloride was 1 mol/1 mol. The mixture was stirred for 2 hours, and the solid substance was isolated by filtration and dried at 110°C.
ii) Catalysts of Examples 31 was produced in the same manner as step ii) of Example 21.

### Comparative Example 1

100 g of an activated carbon was immersed for 8 hours in 100 ml of an aqueous ruthenium chloride solution having a ruthenium concentration of 10 g/1, taken out from the aqueous solution, and dried at 110°C in the air. Thus-obtained ruthenium chloride-deposited activated carbon was introduced to a reaction tube, and heat-treated at 450°C for 2 hours in a reducing hydrogen atmosphere, to obtain a catalyst.

### Example 32

i) A monomer of 4-{1-[(2,4-dinitrophenyl)hydrazono]ethyl}benzene-1,3-diol (Compound 1) was suspended in deionized water, and phenol and an aqueous 40-wt% formaldehyde solution were added to the suspension at the room temperature. The addition ratio of the hydrazone compound/phenol/aqueous 40-wt% formaldehyde solution was 1 g/0.5 g/0.5 ml. NaOH was further added to the mixture, and the resultant was stirred and refluxed at 110°C for 8 hours. The addition ratio of the hydrazone compound/NaOH was 32 g/1 g. Thus-generated solid substance was isolated by filtration and washed with deionized water several times, and the pH of the solid substance in deionized water was adjusted to 7. Then, the solid substance was isolated by filtration, washed, and dried at 60°C for 2 to 3 hours, to obtain 27.5 g of a polymer having a molecular weight of 1,000 to 500,000.
ii) The polymer was suspended in 100 ml of an aqueous 10 g/l ruthenium chloride solution, stirred for 2 hours, and isolated by filtration, to obtain a solid substance. The solid substance was dried at 110°C. The dried solid was dissolved in N-methyl-2-pyrrolidone, and a carbon nanotube was added to the solution such that the weight ratio of the dried solid to the carbon nanotube was 1:9. The components were mixed for 2 hours, N-methyl-2-pyrrolidone was removed by filtration, and the solid substance was dried.

The dried solid was introduced to a reactor and heat-treated at 450°C for 2 hours in a reducing hydrogen atmosphere. Then, the heat-treated solid was immersed for 2 hours in an aqueous 0.1 mol/L barium nitrate solution, and collected by filtration, to obtain a catalyst.

### Examples 33 to 41

Catalysts of Examples 33 to 41 were produced in the same manner as Example 32 except for using as the monomer 2-{1-[(2,4-dinitrophenyl)hydrazono]ethyl}benzen-1-ol (Compound 2),
4-{1-[(2,4-dinitrophenyl)hydrazono]ethyl}benzen-1-ol (Compound 3),
3-{1-[(2,4-dinitrophenyl)hydrazono]ethyl}benzene-1,4-diol (Compound 4),
4-{1-[(2,4-dinitrophenyl)hydrazono]methyl}benzene-1,3-diol (Compound 5),
4-{1-[(4-nitrophenyl)hydrazono]ethyl}benzene-1,3-diol (Compound 6),
4-{1-[(2-nitrophenyl)hydrazono]ethyl}benzene-1,3-diol (Compound 7),
4-{1-[(2,4-dichlorophenyl)hydrazono]ethyl}benzene-1,3-diol (Compound 8),
4-{1-[(phenyl)hydrazono]ethyl}benzene-1,3-diol (Compound 9), and
4-{1-[(2-pyridino)hydrazono]ethyl}benzene-1,3-diol (Compound 10), respectively.

### Comparative Example 2

100 g of a carbon nanotube was immersed for 8 hours in 100 ml of an aqueous ruthenium chloride solution having a ruthenium concentration of 10 g/l, taken out from the aqueous solution, and dried at 110°C in the air. Thus-obtained ruthenium chloride-sdeposited carbon nanotube was introduced to a reaction tube, and heat-treated at 450°C for 2 hours in a reducing hydrogen atmosphere. The heat-treated solid was immersed for 2 hours in an aqueous 0.1 mol/L barium nitrate solution and collected by filtration, to obtain a catalyst.

### Performance evaluation test

### a) Ammonia decomposition activity measurement test

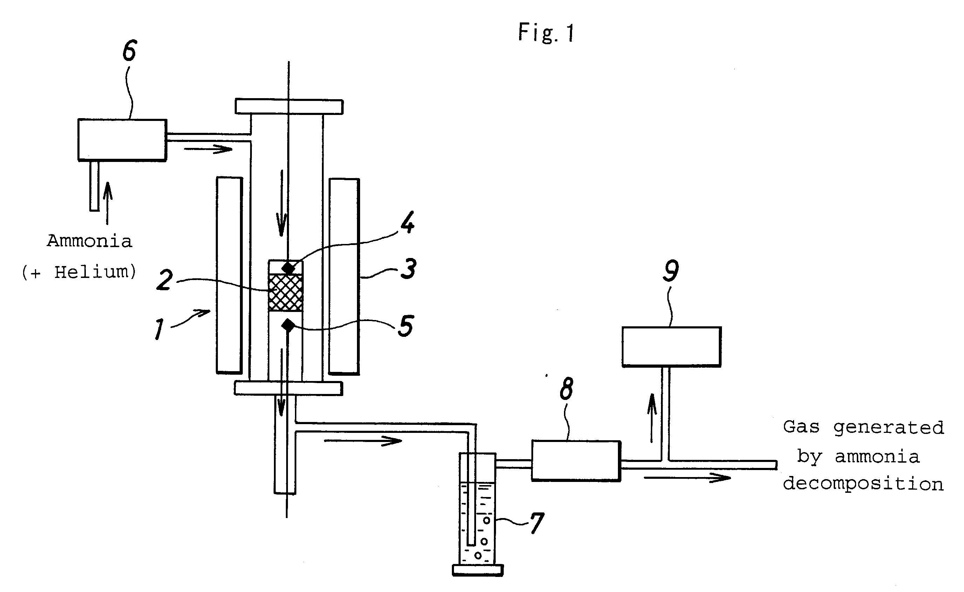

The ammonia decomposition activities of the catalysts produced in Examples and Comparative Examples were measured using a test apparatus shown in Fig. 1 under the following test conditions respectively. In Fig. 1, (1) represents an ammonia decomposition reactor, (2) represents a catalyst-packed bed formed in the reactor (1), (3) represents a heater for the reactor (1), (4) and (5) represent a thermocouple disposed at upper and lower ends of the catalyst-packed bed, (6) represents a flow meter for ammonia (+ helium) supplied to the top of the reactor (1), (7) represents a trap for trapping residual ammonia contained in a gas discharged from a lower end of the reactor (1), and (8) and (9) represent a flow meter and a gas chromatography for a gas generated by ammonia decomposition, respectively.

**Test conditions**

| | |
|---|---|
| Reaction temperature (°C) | 300°C |
| Pressure | Ordinary pressure |
| Inlet ammonia concentration (%) | 100% |
| Space velocity (m³/h/m³-catalyst) | 5000 |

The measurement results are shown in Tables 1 to 3.

**Table 1**

| Catalyst | Monomer | deposited Ru amount (wt%) | Ru particle diameter (nm) | Ammonia decomposition rate (%) |
|---|---|---|---|---|
| Example 1 | Compound 1 | 1.2 | 1 or less | 46.0 |
| Example 2 | Compound 2 | 1.3 | 1 or less | 39.3 |
| Example 3 | Compound 3 | 1.3 | 1 or less | 43.1 |
| Example 4 | Compound 4 | 1.3 | 1 or less | 48.9 |
| Example 5 | Compound 5 | 1.3 | 1 or less | 44.1 |
| Example 6 | Compound 6 | 1.4 | 1 or less | 33.5 |
| Example 7 | Compound 7 | 1.4 | 1 or less | 38.3 |
| Example 8 | Compound 8 | 1.3 | 1 or less | 44.1 |
| Example 9 | Compound 9 | 1.5 | 1 or less | 46.0 |
| Example 10 | Compound 10 | 1.5 | 1 or less | 52.7 |
| Example 11 | Compound 1 | 1.2 | 1 or less | 43.0 |
| Example 12 | Compound 2 | 1.3 | 1 or less | 36.7 |
| Example 13 | Compound 3 | 1.3 | 1 or less | 40.3 |
| Example 14 | Compound 4 | 1.3 | 1 or less | 45.7 |
| Example 15 | Compound 5 | 1.3 | 1 or less | 41.2 |
| Example 16 | Compound 6 | 1.4 | 1 or less | 31.4 |
| Example 17 | Compound 7 | 1.4 | 1 or less | 35.8 |
| Example 18 | Compound 8 | 1.3 | 1 or less | 41.2 |
| Example 19 | Compound 9 | 1.5 | 1 or less | 43.0 |
| Example 20 | Compound 10 | 1.5 | 1 or less | 49.3 |
| Comparative Example 1 | Activated carbon carrier | 12.5 | 7.8 | 5.5 |

**Table 2**

| Catalyst | Monomer | deposited Ru amount (wt%) | Ru particle diameter (nm) | Ammonia decomposition rate (%) |
|---|---|---|---|---|
| Example 21 | Compound 1 | 1.2 | 1 or less | 42.0 |
| Example 22 | Compound 2 | 1.3 | 1 or less | 35.9 |
| Example 23 | Compound 3 | 1.3 | 1 or less | 39.4 |
| Example 24 | Compound 4 | 1.3 | 1 or less | 44.6 |
| Example 25 | Compound 5 | 1.3 | 1 or less | 40.3 |
| Example 26 | Compound 6 | 1.4 | 1 or less | 30.6 |
| Example 27 | Compound 7 | 1.4 | 1 or less | 35.0 |
| Example 28 | Compound 8 | 1.3 | 1 or less | 40.3 |
| Example 29 | Compound 9 | 1.5 | 1 or less | 42.0 |
| Example 30 | Compound 10 | 1.5 | 1 or less | 48.1 |
| Example 31 | Compound 1 | 1.2 | 1 or less | 40.5 |

**Table 3**

| Catalyst | Monomer | deposited Ru amount (wt%) | Ru particle diameter (nm) | Ammonia decomposition rate (%) |
|---|---|---|---|---|
| Example 32 | Compound 1 | 1.2 | 1 or less | 80.0 |
| Example 33 | Compound 2 | 1.3 | 1 or less | 68.3 |
| Example 34 | Compound 3 | 1.3 | 1 or less | 75.0 |
| Example 35 | Compound 4 | 1.3 | 1 or less | 85.0 |
| Example 36 | Compound 5 | 1.3 | 1 or less | 76.7 |
| Example 37 | Compound 6 | 1.4 | 1 or less | 58.3 |
| Example 38 | Compound 7 | 1.4 | 1 or less | 66.7 |
| Example 39 | Compound 8 | 1.3 | 1 or less | 76.7 |
| Example 40 | Compound 9 | 1.5 | 1 or less | 80.0 |
| Example 41 | Compound 10 | 1.5 | 1 or less | 91.7 |
| Comparative Example 2 | Carbon nanotube | 12.5 | 7.8 | 5.5 |

As is clear from the comparison of Examples and Comparative Examples, even though the deposited ruthenium amounts of Examples were significantly smaller than those of Comparative Examples, the ammonia decomposition rates of Examples were far higher than those of Comparative Examples. The deposited transition metal particle diameters of Examples were 1 nm or less, while Comparative Examples exhibited the large diameter of 7.8 nm. In Examples, the ruthenium particles had a large surface area, and the accelerator was effective due to the electric conductivity of the added carbon nanotube. It is considered that the ammonia decomposition rates of Examples were increased due to the factors.

The advantageous effects of the invention were confirmed by the above results.

### b) Durability test

Each of the catalysts produced in Examples and Comparative Examples was used for 1000 hours under the same operation and condition as the above ammonia decomposition activity measurement test except for using a reaction temperature of 500°C.

The ammonia decomposition rate of each catalyst was measured in the initial stage and after 1000-hours use. Incidentally, the reaction temperature was 300°C.

The measurement results are shown in Table 4.

**Table 4**

| Catalyst | Monomer | Ammonia decomposition rate (%) | |
|---|---|---|---|
| | | Initial | After 1000 hours |
| Example 10 | Compound 10 | 52.7 | 51.0 |
| Example 20 | Compound 10 | 49.3 | 48.0 |
| Example 30 | Compound 10 | 48.1 | 47.0 |
| Comparative Example 1 | Activated carbon support | 5.5 | 3.0 |

As is clear from Table 4, the catalysts of Examples were hardly deteriorated even after the long period of use. This is because the agglomeration of the ruthenium was suppressed during the reaction.

### Brief Description of the Drawing

Fig. 1 is a flow diagram showing a test apparatus for ammonia decomposition activity measurement.

### Explanations of Letters or Numerals

- (1): Reactor
- (2): Catalyst-packed bed
- (3): Heater
- (4) (5): Thermocouple
- (6): Flow meter
- (7): Trap
- (8): Flow meter
- (9): Gas chromatography

## Claims

1. An ammonia decomposition catalyst obtained by heat-treating a complex at a temperature of 360°C to 900°C in a reducing atmosphere, wherein the complex contains a polymer having a molecular weight of 1,000 to 500,000 represented by the general formula [I]: 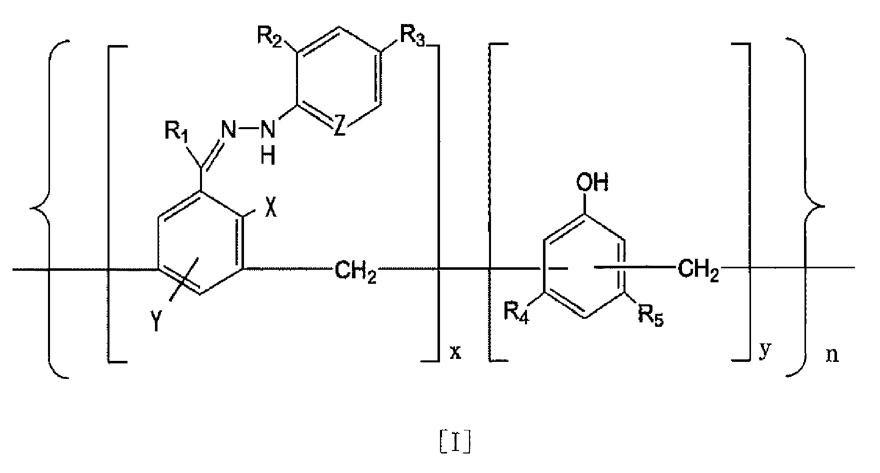 (wherein R₁ represents a hydrogen atom or a hydrocarbon group having 1 to 10 carbon atoms, the hydrocarbon group may be halogenated, R₂ and R₃ may be the same or different and each represent a hydrogen atom, a halogen atom, a nitro group, an acyl group, an ester group, a carboxyl group, a formyl group, a nitrile group, a sulfone group, an aryl group, or a straight or branched alkyl group having 1 to 15 carbon atoms, the alkyl and aryl groups may be halogenated and may be bonded to each other to form a condensed ring with the phenyl ring, X and Y may be the same or different and each represent a hydrogen atom or a hydroxyl group, Z represents CH or N, R₄ and R₅ may be the same or different and each represent a hydrogen atom, a hydroxyl group, an ether group, an amino group, an aryl group, or a straight or branched alkyl group having 1 to 15 carbon atoms, x represents a real number of 1 to 2, y represents a real number of 1 to 3, and n represents a real number of 2 to 120), a transition metal coordinated with the polymer, and an activated carbon added thereto.

2. The ammonia decomposition catalyst according to claim 1, obtained by heat-treating a complex at the temperature of 360°C to 900°C in the reducing atmosphere and by adding an alkali metal compound or an alkaline earth metal compound to the heat-treated complex, wherein the complex contains the polymer having the molecular weight of 1,000 to 500,000 represented by the general formula [I], the transition metal coordinated with the polymer, and a carbon nanotube added instead of the activated carbon.

3. The ammonia decomposition catalyst according to claim 1 or 2, wherein the transition metal is in a form of a fine particle having a diameter of 1 nm or less.

4. The ammonia decomposition catalyst according to any one of claims 1 to 3, wherein the transition metal is ruthenium.
